(19) Europäisches Patentamt
European Patent Office
Office européen des brevets

(11) **EP 4 187 383 A1**

(12) **DEMANDE DE BREVET EUROPEEN**

(43) Date de publication:
**31.05.2023 Bulletin 2023/22**

(21) Numéro de dépôt: **22207127.6**

(22) Date de dépôt: **14.11.2022**

(51) Classification Internationale des Brevets (IPC):
***G06F 9/48*** (2006.01)

(52) Classification Coopérative des Brevets (CPC):
**G06F 9/4881**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **25.11.2021 FR 2112538**

(71) Demandeurs:
- **STMicroelectronics (Grenoble 2) SAS**
  **38000 Grenoble (FR)**
- **STMicroelectronics (Rousset) SAS**
  **13790 Rousset (FR)**

(72) Inventeurs:
- **CARNEL, Isabelle**
  **38680 Presles (FR)**
- **ASSEMAT, Valérie**
  **38800 Champagnier (FR)**
- **HILKENS, Edwin**
  **38500 Coublevie (FR)**
- **RIBEIRO DE FREITAS, Jeremy**
  **38500 Coublevie (FR)**
- **BINI, Jean Claude**
  **06140 Tourrettes sur Loup (FR)**

(74) Mandataire: **Casalonga**
**Casalonga & Partners**
**Bayerstraße 71/73**
**80335 München (DE)**

(54) **PROCÉDÉ DE GESTION D'ÉVÉNEMENTS ET CIRCUIT INTÉGRÉ CORRESPONDANT**

(57) Le circuit intégré comporte une unité de traitement de signaux numériques (HSP) comprenant un dispositif de gestion d'événements (EVTC) configuré pour associer des données d'événement respectives (Evt0, Evt1, ..., EvtN) à des signaux déclencheurs respectifs (HST, Rx, Tx, ADC, DMA), et un processeur de signaux numériques (DSP) configuré pour associer une tâche respective (Tsk0, Tsk1, ..., TskN) à chaque donnée d'événement (Evt0, Evt1, ..., EvtN). Le dispositif de gestion d'événements (EVTC) est adapté pour recevoir les signaux déclencheurs (HST, Rx, Tx, ADC, DMA) sur des bornes d'entrée (I0, I1, ..., IN), et, à la réception d'un signal déclencheur, pour stocker dans un registre d'événement (EvtReg) la donnée d'événement associée au signal déclencheur reçu. Le processeur de signaux numériques (DSP) est configuré pour exécuter la tâche (Tsk0, Tsk1, ..., TskN) associée à la donnée d'événement stockée dans le registre d'événement.

FIG.1

[Fig 1]

EP 4 187 383 A1

Processed by Luminess, 75001 PARIS (FR)

**Description**

Des modes de réalisation et de mise en œuvre concernent la gestion d'événements, tels que des réceptions de signaux déclencheurs, en particulier dans le cadre d'une unité de traitement de signaux numériques.

Le terme « événements », en réaction à une réception de signaux déclencheurs, correspond typiquement au cas où le dispositif receveur, c'est-à-dire par exemple l'unité de traitement de signaux numériques (usuellement « digital signal processor » en anglais), est prévu pour avoir un état d'attente d'événement apte à réagir immédiatement à la réception d'un signal déclencheur. L'état d'attente d'événement est typiquement prévu entre deux exécutions de tâches.

Les événements se distinguent notamment des interruptions, qui se produisent également en réaction à une réception de signaux « d'interruption », et qui interrompent typiquement l'exécution d'une tâche en cours du dispositif receveur. Des mécanismes de transition de contexte sont typiquement mis en œuvre afin de sauvegarder les travaux en cours et le contexte de l'exécution, au moment de l'interruption.

Par ailleurs, la gestion des événements et des interruptions utilise typiquement des mécanismes logiques d'interprétation (« interpreters » en anglais) configurés pour analyser l'événement ou l'interruption reçu afin de mettre en œuvre l'action requise. Typiquement, l'interprétation peut comprendre notamment un décodage du contenu du signal déclencheur ou de l'interruption de manière à identifier une commande, ou encore une identification du dispositif qui a généré le signal déclencheur ou l'interruption, de manière à prendre en considération ses droits d'accès ou la priorité de sa commande.

Les techniques classiques permettent ainsi de bénéficier d'une flexibilité d'applications, avec des commandes variées, mais présentent l'inconvénient d'avoir une réactivité retardée par les mécanismes de transition de contexte, et par les mécanismes d'interprétation.

Or, dans certaines applications sensibles à la réactivité, les retards de la réaction introduits par les techniques classiques peuvent dépasser le temps de réaction imposé par l'application.

Par exemple, les commandes de moteurs sont des applications sensibles à la réactivité, pour lesquelles le temps de réaction maximal peut être de l'ordre de 15 cycles d'horloges pour un tâche effectuée par une unité de traitement de signaux numériques.

Ainsi, il existe un besoin de proposer des solutions de gestion d'événements ayant une réactivité accrue, tout en bénéficiant d'une grande flexibilité.

Selon un aspect, il est proposé à cet égard un circuit intégré comportant une unité de traitement de signaux numériques comprenant un dispositif de gestion d'événements configuré pour associer des données d'événement respectives à des signaux déclencheurs respectifs, et un processeur de signaux numériques configuré pour associer une tâche respective à chaque donnée d'événement, le dispositif de gestion d'événements étant adapté pour recevoir les signaux déclencheurs sur des bornes d'entrée, et, à la réception d'un signal déclencheur, pour stocker dans un registre d'événement la donnée d'événement associée au signal déclencheur reçu, le processeur de signaux numériques étant configuré pour exécuter la tâche associée à la donnée d'événement stockée dans le registre d'événement.

Par exemple, le dispositif de gestion d'événements est configuré pour associer des données d'événement respectives à des signaux déclencheurs respectifs au moyen d'une table de correspondance, c'est-à-dire une liste d'association des données d'événement avec chaque signal déclencheur et la borne d'entrée respective. Par exemple, le processeur de signaux numériques est configuré pour associer une tâche respective à chaque donnée d'événement de façon logicielle, c'est-à-dire par un programme prévoyant les exécutions respectivement associées à chaque donné d'événement.

Ainsi, en d'autres termes, le dispositif selon cet aspect comporte un dispositif de gestion d'événements configuré pour réagir à un stimulus (i.e. une réception d'un signal déclencheur) et préparer une donnée d'événement correspondante, de sorte que le processeur de signaux numériques peut immédiatement exécuter la tâche associée à l'événement associé au stimulus.

En conséquence, le temps de réaction pour mettre en œuvre la tâche à la réception du signal déclencheurs ne comporte pas de phase de transition de contexte, ni de phase d'analyse et d'interprétation de la commande.

Les associations entre les données d'événement et les signaux déclencheurs, ainsi qu'entre les tâches et les données d'événement étant avantageusement prévues d'avances, le temps de réactions peut correspondre au temps d'une opération de consultation (par exemple de la table de correspondance et du registre d'événement) et est quasiment nul.

Selon un mode de réalisation, le processeur de signaux numériques est configuré pour exécuter ladite tâche si le processeur de signaux numériques est dans un état d'attente d'événement.

L'état d'attente d'événement est par exemple activé à la fin d'une exécution d'une tâche par le processeur de signaux numériques. Cela correspond à une mise en œuvre dans laquelle des tâches en cours de traitement ne sont pas interrompues.

Ainsi, par exemple si signal déclencheur est reçu au cours d'un traitement, au moment où le processeur de signaux numériques entre dans l'état d'attente d'événement, la donnée d'événement a déjà été stockée dans le registre d'événement par le dispositif de gestion d'événements. Le processeur de signaux numériques peut ainsi réagir immédiatement, sans procéder à une analyse quelconque.

Selon un mode de réalisation, le dispositif de gestion d'événements est adapté pour être paramétré lors d'une phase d'initialisation, par une commande externe définissant les associations entre les données d'événements et les signaux déclencheurs.

La commande externe provient par exemple d'un dispositif maître, tel qu'un processeur hôte d'un système sur puce ou d'un micro contrôleur.

Selon un mode de réalisation, le processeur de signaux numériques est configuré de façon logicielle pour associer la tâche respective à chaque donnée d'événement, et pour exécuter lesdites tâches.

Ainsi, le dispositif de gestion d'événements est flexible et configurable par un utilisateur, par exemple selon les cas d'usages de différents signaux déclencheurs et de différentes tâches à exécuter en réaction à ces derniers.

Selon un mode de réalisation, le dispositif de gestion d'événements est configuré pour hiérarchiser les données d'événement par ordre de priorité, de sorte qu'une donnée d'événement de priorité supérieure peut remplacer une donnée d'événement de priorité inférieure dans le registre d'événement, tandis qu'une donnée d'événement de priorité inférieure ne peut pas remplacer une donnée d'événement de priorité supérieure dans le registre d'événement.

Selon un autre aspect, il est proposé un procédé de gestion d'événements, au sein d'une unité de traitement de signaux, comprenant une association de données d'événement respectives à des signaux déclencheurs pouvant être reçus sur des bornes d'entrée et une association de tâches respectives aux données d'événements, le procédé comprenant une réception d'un signal déclencheur sur une borne d'entrée, un stockage de la donnée d'événement associée au signal déclencheur reçu dans un registre d'événement, et une exécution de la tâche associée à la donnée d'événement stockée dans le registre d'événement.

Selon un mode de mise en œuvre, le stockage de ladite donnée d'événement dans le registre d'événement est fait en réponse à la réception dudit signal déclencheur, et l'exécution de ladite tâche est faite si un processeur de signaux numériques de ladite unité de traitement de signaux est dans un état d'attente d'événement.

Selon un mode de mise en œuvre, l'association de données d'événement respectives aux signaux déclencheurs est paramétrée lors d'une phase d'initialisation, par une commande externe définissant lesdites associations entre les données d'événements et les signaux déclencheurs.

Selon un mode de mise en œuvre, l'association de tâches respectives aux données d'événements, et l'exécution de la tâche associée à la donnée d'événement stockée dans le registre d'événement, sont configurées de façon logicielle au sein d'un processeur de signaux numériques.

Selon un mode de mise en œuvre, les données d'événement sont hiérarchisées par ordre de priorité, de sorte qu'une donnée d'événement de priorité supérieure peut remplacer une donnée d'événement de priorité inférieure dans le registre d'événement, tandis qu'une donnée d'événement de priorité inférieure ne peut pas remplacer une donnée d'événement de priorité supérieure dans le registre d'événement.

D'autres avantages et caractéristiques de l'invention apparaîtront à l'examen de la description détaillée de modes de réalisation et de mise en œuvre, nullement limitatifs, et des dessins annexés, sur lesquels :

[Fig 1] ;

[Fig 2] ;

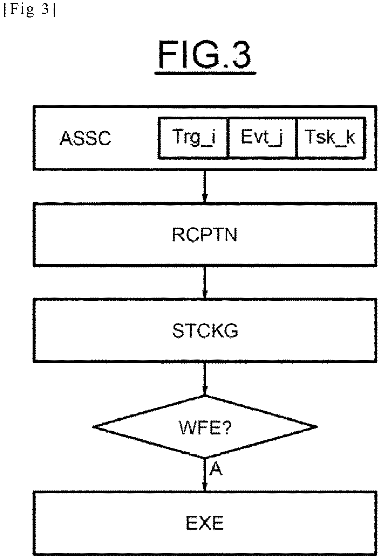

[Fig 3] illustrent des modes de réalisation et de mise en œuvre de l'invention.

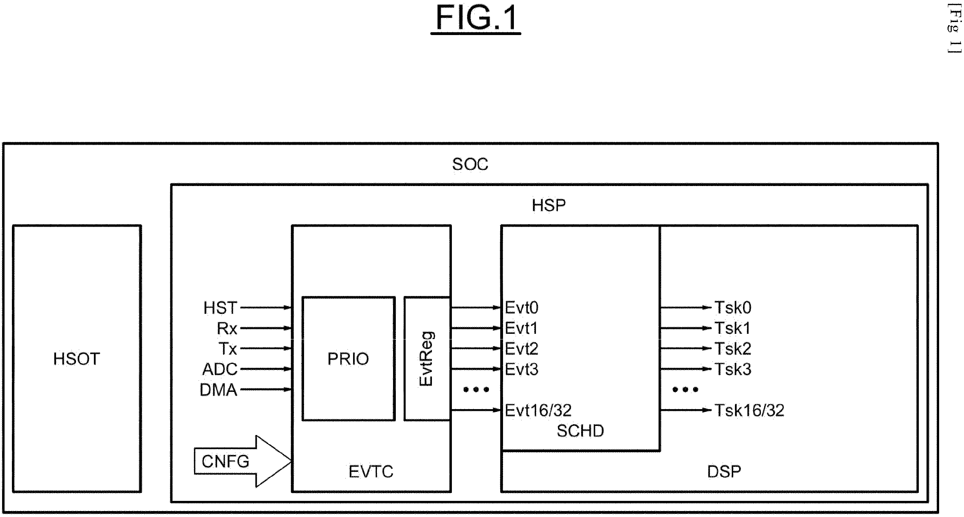

La figure 1 illustre un exemple de circuit intégré, par exemple un système sur puce SOC tel qu'un microcontrôleur, comportant en particulier une unité de traitement de signaux numériques HSP comprenant un dispositif de gestion d'événements EVTC et un processeur de signaux numériques DSP. Le système sur puce SOC comporte en outre un processeur à usage général HOST, également appelé processeur hôte.

Le dispositif de gestion d'événements EVTC est adapté pour recevoir les signaux déclencheurs HST, Rx, Tx, ADC, DMA sur des bornes d'entrée I0, I1, I2, I3, ..., In, et est configuré pour associer des données d'événement Evt0, Evt1, Evt2, Evt3, ..., Evt15/31, respectivement à chacun des signaux déclencheurs HST, Rx, Tx, ADC, DMA.

Les signaux déclencheurs peuvent être de natures diverses, c'est-à-dire qu'ils peuvent par exemple provenir de différents périphériques du circuit intégré SOC tels qu'un processeur hôte HOST, un étage de réception Rx, un étage de transmission Tx, un convertisseur analogique-numérique ADC, un bus d'accès direct en mémoire DMA, le processeur de signaux numériques DSP lui-même, ou encore d'autres périphériques classiques des circuit intégrés et connus de l'homme de l'art.

Lorsque l'un des signaux déclencheurs HST, Rx, Tx, ADC, DMA est reçu sur la borne d'entrée respective I0-In, le dispositif de gestion d'événements EVTC est configuré pour stocker dans un registre d'événement EvtReg la donnée d'événement Evt0, Evt1, ..., Evt15/31 associée au signal déclencheur reçu HST, Rx, Tx, ADC, DMA.

Les données d'événement Evt0-Evt15/31 peuvent être des mots binaires codés sur 4 bits permettant de prévoir 16 événements différents (N=15) ou sur 5 bits permettant de prévoir 32 événements différents (N=31). D'autres codes peuvent être choisis en fonction du langage souhaité et du nombre d'événements gérés.

Le processeur de signaux numériques DSP, ou par exemple en particulier un planificateur (usuellement « scheduler » en anglais) SCHD du processeur de signaux numériques DSP, est configuré pour associer une tâche respective Tsk0, Tsk1, Tsk2, Tsk3, ..., Tsk15/31 à chaque donnée d'événement EvtO-Evtl5/31.

Les différentes tâches TskO-Tskl5/31 peuvent par exemple être des fonctions ou des listes de commandes permettant de mettre en œuvre un traitement par l'unité de traitement de signaux numériques DSP. Les traitements effectués par l'unité de traitement de signaux numériques DSP sont par exemple des filtrages numériques du type filtre à réponse impulsionnelle finie « FIR » (pour « Finite Impulse Response »), des opérations calculatoires de multiplication-accumulation, une simple opération calculatoire du type multiplication, ou d'autres traitements de complexité variables.

Le processeur de signaux numériques DSP est configuré pour lire la donnée d'événement Evt0-Evt15/31 stockée dans le registre d'événement EvtReg, et pour exécuter la tâche TskO-Tskl5/31 associée à ladite donnée d'événement EvtO-Evtl5/31.

Par exemple, le processeur de signaux numériques DSP peut avoir un état d'exécution, dans lequel le processeur DSP est configuré pour ne pas réagir à une réception d'un événement jusqu'à avoir terminé l'exécution d'une tâche en cours ; et un état d'attente d'événement, par exemple entre chaque état d'exécution, dans lequel processeur de signaux numériques DSP est configuré pour sonder (c'est-à-dire lire, par exemple en continu) le contenu du registre d'événement EvtReg, comportant éventuellement une donnée d'événement Evt0-Evt15/31, et, le cas échéant, immédiatement exécuter la tâche Tsk0-Tsk15/31 associée.

Ainsi, si un signal déclencheur HST, Rx, Tx, ADC, DMA est reçu pendant l'état d'attente d'événement du processeur de signaux numériques DSP, alors le processeur de signaux numériques DSP détecte la donnée d'événement Evt0-Evt15/31 dans le registre d'événement EvtReg, et via une simple fonction d'appel, commence l'exécution de la tâche associée TskO-Tskl5/31.

Et, si un signal déclencheur HST, Rx, Tx, ADC, DMA est reçu pendant l'état d'exécution du processeur de signaux numériques DSP, alors le dispositif de gestion d'événements EVTC va stocker la donnée d'événement EvtO-Evtl5/31 dans le registre d'événement EvtReg, et la tâche correspondante Tsk0-Tsk15/31 est immédiatement exécutée au moment où le processeur de signaux numériques DSP entre dans l'état d'attente d'événement.

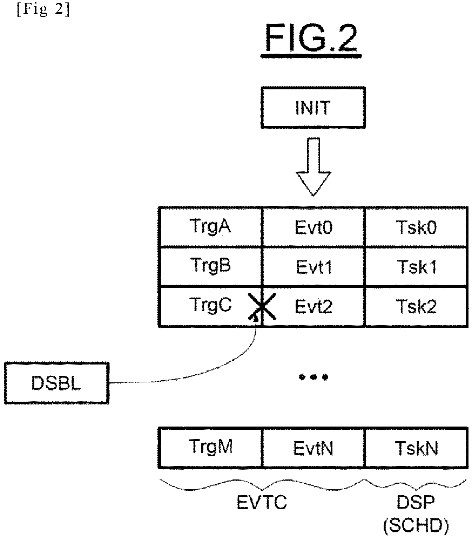

En outre, les différentes données d'événement Evt0-Evt15/31 peuvent être hiérarchisées par ordre de priorité, d'une manière configurable par exemple à chaque initialisation INIT (figure 2) de l'unité de traitement de signaux numériques HSP, au moyen d'une commande CNFG du processeur hôte HOST.

On se réfère à cet égard à la figure 2.

La figure 2 illustre schématiquement la liste des associations entre les signaux déclencheurs TrgA, TrgB, TrgC, ..., TrgM, et les données d'événement respectives Evt0, Evt1, Evt2, ..., EvtN ; ainsi qu'entre les données d'événement EvtO-EvtN et les tâches respectives Tsk0, Tsk1, Tsk2, ..., TskN.

Par exemple, le dispositif de gestion d'événements EVTC est configuré de façon matérielle pour comporter, par exemple au sein d'une table de correspondance (dispositif usuellement désigné « LUT » pour « Look-Up Table » en anglais), les associations entre les signaux déclencheurs TrgA-TrgM, issus de bornes d'entrées respectives, et les données d'événement respectives EvtO-EvtN.

Par exemple, le processeur de signaux numériques DSP, en particulier le planificateur (SCHD), est configuré de façon logicielle pour prévoir les associations entre les données d'événement EvtO-EvtN, et les tâches respectives Tsk0-TskN, c'est-à-dire par un programme prévoyant une fonction d'appel à chacune des tâches Tsk0-TskN, commandée par la donnée d'événement EvtO-EvtN correspondante stockée dans le registre d'événement EvtReg.

Ainsi, la gestion d'événements est configurée d'une part dans le dispositif de gestion d'événements EVTC, et d'autre part dans le processeur de signaux numériques DSP.

Le dispositif de gestion d'événements EVTC est avantageusement adapté pour être paramétré, par exemple lors d'une phase d'initialisation INIT du circuit intégré SOC, par une commande externe CNFG définissant les associations entre les données d'événements et les signaux déclencheurs. La commande externe peut provenir du processeur hôte HOST et correspondre à un choix d'usage d'un utilisateur. L'utilisateur peut également définir, de façon logicielle au sein du processeur de signaux numériques DSP, les associations entre les tâches à exécuter et les données d'événements.

Ainsi, un utilisateur du circuit intégré SOC peut intégralement paramétrer la gestion d'événements selon l'application du circuit intégré SOC et du processeur de traitement de signaux numériques DSP.

En outre, le dispositif de gestion d'événements EVTC est avantageusement capable de mettre en œuvre une gestion hiérarchisée sur la réception des signaux déclencheurs TrgA-TrgM par ordre de priorité, de sorte qu'en cas de réception de plusieurs signaux déclencheurs correspondant à des tâches différentes, c'est la tâche associée au signal déclencheur ayant la plus grande importance qui est traitée.

A cet égard, un index « 0, 1, 2, ..., N » est attribué à chaque donnée d'événement Evt0, Evt1, Evt2, ..., EvtN, de manière à être représentatif de la priorité du signal déclencheur TrgA, TrgB, TrgC, ..., TrgM respectivement associé. Par exemple, l'index « 0 » (Evt0) peut être représentatif de la priorité la plus grande tandis que l'index « N » (EvtN) peut être représentatif de la priorité la plus faible.

Et, le dispositif de gestion d'événements EVTC peut être configuré de sorte qu'une donnée d'événement de priorité supérieure peut remplacer une donnée d'événement de priorité inférieure dans le registre d'événement EvtReg, tandis qu'une donnée d'événement de priorité inférieure ne peut pas remplacer une donnée d'événement de priorité supérieure dans le registre d'événement EvtReg.

Par conséquent, si par exemple au cours d'une phase d'exécution, un signal déclencheur de priorité supérieure (par ex. TrgB) est reçu après un signal déclencheur de priorité inférieure (par ex. TrgC), alors la donnée d'événement de priorité supérieure (par ex. Evt1) pourra écraser la donnée d'événement de priorité inférieure (par ex. Evt2) dans le registre d'événement EvtReg. Inversement, si un signal déclencheur de priorité inférieure (par ex. TrgC) est reçu après un signal déclencheur de priorité supérieure (par ex. TrgB), alors la donnée d'événement de priorité supérieure (par ex. Evt1) n'est pas écrasée dans le registre d'événement EvtReg.

Ainsi, lorsque le processeur de signaux numériques DSP entre dans l'état d'attente d'événement, c'est la tâche (par ex. Tsk1) associée à la donnée d'événement (par ex. Evt1) stockée dans le registre d'événement EvtReg, et correspondant au signal déclencheur de priorité supérieure (par ex. TrgB), qui est exécutée.

Par ailleurs, le dispositif de gestion d'événement EVTC peut également être paramétré en cours d'utilisation du circuit intégré SOC, au moyen d'une commande de désactivation DSBL. La commande de désactivation DSBL est par exemple émise par le processeur hôte HOST. La commande de désactivation DSBL peut permettre par exemple de désactiver l'effet de l'un des signaux déclencheurs (par ex. TrgC), en ne stockant pas la donnée d'événement respectivement associée (par ex. Evt2) dans le registre d'événement EvtReg.

La figure 3 illustre un exemple de procédé de gestion d'événements, par exemple mis en œuvre au sein d'une unité de traitement de signaux HSP telle que décrite ci-avant en relation avec les figures 1 et 2.

Le procédé comprend ainsi une étape d'association ASSC, dans laquelle les données d'événement Evt_j sont respectivement associées aux signaux déclencheurs Trg_i pouvant être reçus sur des bornes d'entrée, par exemple de façon paramétrée dans le dispositif de gestion d'événements EVTC (figures 1 et 2) lors d'une phase d'initialisation par une commande externe ; et dans laquelle les tâches Tsk_k sont respectivement associées aux données d'événements Evt_j, par exemple au moyen d'une configuration logicielle du processeur de signaux numériques DSP (figures 1 et 2).

Le procédé comprend ensuite, par exemple lors d'une phase de fonctionnement de l'unité de traitement de signaux HSP, une étape de réception d'un signal déclencheur RCPTN dans laquelle un signal déclencheur HST, Rx, Tx, ADC, DMA (figure 1) peut être reçu sur l'une desdites bornes d'entrée.

En réponse à la réception dudit signal déclencheur Trg_i, le procédé comprend un stockage STCKG de la donnée d'événement associée Evt_j à ce signal déclencheur dans le registre d'événement EvtReg.

Le procédé comprend ensuite une exécution EXE de la tâche Tsk_k associée à la donnée d'événement Evt_j stockée dans le registre d'événement. En particulier, l'exécution EXE est faite si le processeur de signaux numériques DSP (figures 1, 2) de ladite unité de traitement de signaux est dans un état d'attente d'événement WFE - A (affirmatif).

En résumé, un utilisateur peut configurer le dispositif de gestion d'événements EVTC, par l'intermédiaire d'une commande CNFG initiée par un processeur hôte HOST. La commande CNFG configure la table de correspondance connectant les signaux déclencheurs TrgA-TrgM avec les données d'événement EvtO-EvtN, d'une manière permettant de choisir la priorité des signaux déclencheurs TrgA-TrgM. L'utilisateur peut parallèlement définir de façon logicielle la tâche Tsk0-TskN associée aux données d'événements respectives EvtO-EvtN (connectés aux signaux déclencheurs).

La table de correspondance est un ensemble de plusieurs tâches programmées lors d'une phase d'initialisation, de sorte que chaque tâche est associée à un événement ayant un index respectif pouvant définir une priorité. Avantageusement, les tâches ne sont réveillées que par un événement respectif, et ne sont pas interruptibles, de sorte qu'une tâche exécutée est exécutée jusqu'à sa fin. La planification des tâches par le processeur de signaux numériques commence lorsque la table de correspondance est entièrement créée, et ne comporte qu'une fonction d'attente d'événement « wfe() » et un appel de la fonction mettant œuvre la tâche.

L'exemple ci-dessous de code logiciel du planificateur SCHD du processeur de signaux numériques DSP, permet, en collaboration avec le dispositif de gestion d'événements EVTC, de commencer l'exécution d'une tâche en moins de 15 cycles du signal d'horloge cadençant le processeur de signaux numériques DSP après réception du signal déclencheur :

wfe(); /*attente de l'événement*/

index = getEvent(); /*lecture de l'événement reçu*/

$$ptrTask[index]\text{-}{>}fonction(ptrTask[index]\text{-}{>}ptrParam) \;/\!*appel\;de\;la\;t\hat{a}che*/$$

Les termes situés entre les symboles « /* » et « */ » sont des commentaires décrivant sommairement l'action de la ligne de code correspondante.

**Revendications**

1. Circuit intégré comportant une unité de traitement de signaux numériques (HSP) comprenant un dispositif de gestion d'événements (EVTC) configuré pour associer des données d'événement respectives (EvtO, Evt1, ..., EvtN) à des signaux déclencheurs respectifs (HST, Rx, Tx, ADC, DMA), et un processeur de signaux numériques (DSP) configuré pour associer une tâche respective (TskO, Tsk1, ..., TskN) à chaque donnée d'événement (EvtO, Evt1, ..., EvtN), le dispositif de gestion d'événements (EVTC) étant adapté pour recevoir les signaux déclencheurs (HST, Rx, Tx, ADC, DMA) sur des bornes d'entrée (I0, I1, ..., IN), et, à la réception d'un signal déclencheur, pour stocker dans un registre d'événement (EvtReg) la donnée d'événement associée au signal déclencheur reçu, le processeur de signaux numériques (DSP) étant configuré pour exécuter la tâche (TskO, Tsk1, ..., TskN) associée à la donnée d'événement stockée dans le registre d'événement.

2. Circuit intégré selon la revendication 1, dans lequel le processeur de signaux numériques (DSP) est configuré pour exécuter ladite tâche (TskO, Tsk1, ..., TskN) si le processeur de signaux numériques (DSP) est dans un état d'attente d'événement.

3. Circuit intégré selon l'une des revendications 1 ou 2, dans lequel le dispositif de gestion d'événements (EVTC) est adapté pour être paramétré lors d'une phase d'initialisation (INIT), par une commande externe (CNFG) définissant les associations entre les données d'événements et les signaux déclencheurs.

4. Circuit intégré selon l'une des revendications 1 à 3, dans lequel le processeur de signaux numériques (DSP) est configuré de façon logicielle pour associer la tâche (TskO, Tsk1, ..., TskN) respective à chaque donnée d'événement (EvtO, Evt1, ..., EvtN), et pour exécuter lesdites tâches (TskO, Tqk1, ..., TskN).

5. Circuit intégré selon l'une des revendications précédentes, dans lequel le dispositif de gestion d'événements (EVTC) est configuré pour hiérarchiser les données d'événement (EvtO, Evt1, ..., EvtN) par ordre de priorité, de sorte qu'une donnée d'événement de priorité supérieure peut remplacer une donnée d'événement de priorité inférieure dans le registre d'événement (EvtReg), tandis qu'une donnée d'événement de priorité inférieure ne peut pas remplacer une donnée d'événement de priorité supérieure dans le registre d'événement (EvtReg).

6. Procédé de gestion d'événements, au sein d'une unité de traitement de signaux (HSP), comprenant une association de données d'événement (EvtO, Evt1, ..., EvtN) respectives à des signaux déclencheurs pouvant être reçus sur des bornes d'entrée et une association de tâches (Tsk0, Tsk1, ..., TskN) respectives aux données d'événements, le procédé comprenant une réception d'un signal déclencheur (HST, Rx, Tx, ADC, DMA) sur une borne d'entrée, un stockage de la donnée d'événement associée au signal déclencheur reçu dans un registre d'événement (EvtReg), et une exécution de la tâche (Tsk0, Tsk1, ..., TskN) associée à la donnée d'événement stockée dans le registre d'événement (EvtReg).

7. Procédé selon la revendication 6, dans lequel le stockage de ladite donnée d'événement dans le registre d'événement (EvtReg) est fait en réponse à la réception dudit signal déclencheur (HST, Rx, Tx, ADC, DMA), et l'exécution de ladite tâche (TskO, Tsk1, ..., TskN) est faite si un processeur de signaux numériques (DSP) de ladite unité de traitement de signaux (HSP) est dans un état d'attente d'événement.

8. Procédé selon l'une des revendications 6 ou 7, dans lequel l'association des données d'événement (EvtO, Evt1, ..., EvtN) respectives aux signaux déclencheurs est paramétrée lors d'une phase d'initialisation (INIT), par une commande externe (CNFG) définissant lesdites associations entre les données d'événements et les signaux déclencheurs.

9. Procédé selon l'une des revendications 6 à 8, dans lequel l'association de tâches (TskO, Tsk1, ..., TskN) respectives aux données d'événements, et l'exécution de la tâche (TskO, Tsk1, ..., TskN) associée à la donnée d'événement stockée dans le registre d'événement (EvtReg), sont configurées de façon logicielle au sein d'un processeur de signaux numériques (DSP).

10. Procédé selon l'une des revendications 6 à 9, dans lequel les données d'événement (EvtO, Evt1, ..., EvtN) sont hiérarchisées par ordre de priorité, de sorte qu'une donnée d'événement de priorité supérieure peut remplacer une donnée d'événement de priorité inférieure dans le registre d'événement (EvtReg), tandis qu'une donnée d'événement de priorité inférieure ne peut pas remplacer une donnée d'événement de priorité supérieure dans le registre d'événement (EvtReg).

[Fig 1]

# FIG.1

[Fig 2]

# FIG.2

[Fig 3]

# FIG.3

Europäisches
Patentamt

European
Patent Office

Office européen
des brevets

# RAPPORT DE RECHERCHE EUROPEENNE

Numéro de la demande

**EP 22 20 7127**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2017/329629 A1 (NETCLEUS SYSTEMS CORPORATION) 16 novembre 2017 (2017-11-16) * abrégé * * alinéas [0002], [0008] – [0012], [0031] – [0037], [0052], [0069] – [0070], [0088] – [0103], [0110], [0112], [0382] * * figures 1,15 * | 1-10 | INV. G06F9/48 |
| A | EP 3 650 980 A2 (STMICROELECTRONICS (ROUSSET) SAS) 13 mai 2020 (2020-05-13) * le document en entier * | 1-10 | |
| A | EP 3 502 949 A1 (THALES SA) 26 juin 2019 (2019-06-26) * le document en entier * | 1-10 | |
| A | EP 1 398 698 A1 (CENTRE NATIONAL D'ETUDES SPATIALES) 17 mars 2004 (2004-03-17) * le document en entier * | 1-10 | |
| A | US 2020/167343 A1 (SNOWFLAKE INC.) 28 mai 2020 (2020-05-28) * le document en entier * | 1-10 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| La Haye | 14 mars 2023 | Tomàs Blanch, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 20 7127

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-03-2023

| Document brevet cité au rapport de recherche | Date de publication | Membre(s) de la famille de brevet(s) | Date de publication |
|---|---|---|---|
| US 2017329629 A1 | 16-11-2017 | CN 101529383 A | 09-09-2009 |
| | | EP 2056198 A1 | 06-05-2009 |
| | | JP 4119945 B2 | 16-07-2008 |
| | | JP WO2008023426 A1 | 07-01-2010 |
| | | TW 200828120 A | 01-07-2008 |
| | | US 2010287360 A1 | 11-11-2010 |
| | | US 2016232004 A1 | 11-08-2016 |
| | | US 2017329629 A1 | 16-11-2017 |
| | | WO 2008023426 A1 | 28-02-2008 |
| EP 3650980 A2 | 13-05-2020 | CN 111147689 A | 12-05-2020 |
| | | CN 210466188 U | 05-05-2020 |
| | | EP 3650980 A2 | 13-05-2020 |
| | | FR 3088124 A1 | 08-05-2020 |
| | | US 2020145558 A1 | 07-05-2020 |
| EP 3502949 A1 | 26-06-2019 | EP 3502949 A1 | 26-06-2019 |
| | | ES 2933498 T3 | 09-02-2023 |
| | | FR 3075412 A1 | 21-06-2019 |
| | | PL 3502949 T3 | 23-01-2023 |
| EP 1398698 A1 | 17-03-2004 | EP 1398698 A1 | 17-03-2004 |
| | | FR 2844611 A1 | 19-03-2004 |
| US 2020167343 A1 | 28-05-2020 | CN 112997167 A | 18-06-2021 |
| | | DE 202019005723 U1 | 30-08-2021 |
| | | EP 3887966 A1 | 06-10-2021 |
| | | US 2020167340 A1 | 28-05-2020 |
| | | US 2020167343 A1 | 28-05-2020 |
| | | US 2021357391 A1 | 18-11-2021 |
| | | US 2021390094 A1 | 16-12-2021 |
| | | US 2022164339 A1 | 26-05-2022 |
| | | US 2022188297 A1 | 16-06-2022 |
| | | WO 2020112663 A1 | 04-06-2020 |

EPO FORM P0460

Pour tout renseignement concernant cette annexe : voir Journal Officiel de l'Office européen des brevets, No.12/82